# EUROPEAN PATENT SPECIFICATION

(11) **EP 2 155 510 B1**
(45) Date of publication and mention of the grant of the patent: **08.12.2010**
(21) Application number: 08750292.8
(22) Date of filing: 15.05.2008
(51) Int. Cl.: B60J 1/02, B60J 10/00, B60J 10/02

(54) **AUTOMOTIVE GLAZING AND COMPONENT ASSEMBLY**
KFZ-VERGLASUNG UND KOMPONENTENANORDNUNG
VITRAGE AUTOMOBILE ET ENSEMBLE COMPOSANT

(30) Priority: 15.05.2007 GB 0709316; 13.03.2008 GB 0804594
(43) Date of publication of application: 24.02.2010
(73) Proprietor: PILKINGTON Automotive Deutschland GmbH, 58455 Witten (DE)
(72) Inventor: ERNER, Wolfgang, 58640 Iserlohn (DE); SENGE, Christoph, 66763 Dillingen (DE)
(74) Representative: Pettet, Nicholas Edward
(86) International application number: PCT/EP2008/055933
(87) International publication number: WO 2008/138959

(56) References cited:
- EP-A- 0 545 896
- EP-A- 1 526 019
- EP-B- 1 280 675
- DE-A1- 19 939 191

## Description

The present invention relates to an automotive glazing, in particular, an automotive glazing having a glazing component mounting strip attached adjacent at least one edge.

When an automotive glazing is fitted into a vehicle, such as a car, it is vital that the seal between the glazing and the metal work of the car body is watertight. To help with this, the glazing is usually provided with a flexible gasket along at least one edge, which bears against the opening in the body of the vehicle, forming a seal, as described in EP 0 545 896 B1. However, for a windscreen or a backlight, it may also be necessary to provide additional glazing components, such as a cowling or water-tray along the lower edge of the glazing, where the glazing abuts the vehicle, so that water flowing off the windscreen is directed away from the interior of the vehicle.

A windscreen having a cowling attached along its lower edge is described in EP 1 280 675 B1. A moulded cowling comprising a plastic material, such as polypropylene, strengthened by a bent metal insert is mounted on a major face of the windscreen by means of a support or mounting profile. The mounting profile is glued onto the glazing, and the cowling clipped onto the mounting profile. The cowling is provided with a tray region for containing water that runs down the windscreen when wet, draining it away from the interior of the vehicle. The mounting profile is held in close contact with the edge of the windscreen, forming a waterproof join, by a self-adhesive tape. An adhesive bead is then moulded onto the periphery of the windscreen, overmoulding a portion of the cowling, providing further waterproofing and adhesive strength. Whilst this provides a good waterproof seal and firm bonding between the cowling and the windscreen, the cowling itself is bulky (up to 10mm in height, typically double the thickness of the glazing to which it is attached), and extends beyond the periphery of the windscreen. This creates problems when transporting and storing the finished windscreen, as fewer parts can be stored and transported on a single rack. Consequently, storage and transportation costs are increased when compared with the windscreen alone.

An alternative manner of attaching a cowling to a glazing is described in D1 199 39 191 B4 which corresponds to the preamble of claim 1. A series of short 'L'-shaped profiles are mounted onto a major face of a laminated glazing using an adhesive, such as a one- or two-component polyurethane adhesive. These profiles are used to attach a cowling or water-tray, having holes to receive wipers, to the lower edge of the windscreen. The cowling clips into the 'L'-shaped profiles, and abuts the edge of the glazing. When mounted in a vehicle, water runs down the windscreen, into the water-tray, where it drains away. However, this method also suffers from the drawback that even though the glass may be stored with only the numerous 'L'-shaped profiles attached, this will still require greater storage space and consequential transport costs compared with the glazing alone, as the profiles extend both beyond the periphery of the glazing and a significant distance out of the horizontal plane of the glazing. In addition, the strength of the joint between the 'L'-shaped profiles and the surface of the glass is determined entirely by the adhesive properties of the polyurethane adhesive. Polyurethane adhesives require significant time to cure fully before reaching their maximum adhesive strength, and therefore the glazing cannot be transported or stored on racks until this curing is complete.

It is therefore desirable to be able to find a way to attach a glazing component, such as a cowling or water tray, or their mounting profiles, to an automotive glazing whilst minimising storage and transportation costs and ensuring that a strong bond between the glazing component and the glazing can be achieved quickly and reliably.

The present invention aims to address these problems by providing an automotive glazing having the features of claim 1.

Preferably the glazing comprises a single mounting strip along at least one edge. The use of single mounting strip rather than of a plurality of short individual mounting elements provides advantages in handling.

Alternatively, the glazing may comprise at least a first and a second mounting strip positioned along each edge, the first mounting strip being generic and the second mounting strip being vehicle specific, wherein the first mounting strip is joined to the second mounting strip.

The glazing may comprise at least a first and a second mounting strip positioned along each edge, the first mounting strip being generic and the second mounting strip being vehicle specific, the first mounting strip being spaced apart from the second mounting strip by a spacing length that is less than the length of either the first or the second mounting strips.

Preferably the adhesive is of a type requiring heat and pressure bonded to the mounting strip and the surface of the glazing. More preferably, the adhesive is polyvinyl butyral (PVB). PVB is a standard material generally used for interlayers of laminated glass, and strips of adhesive material needed to implement the invention may be easily cut from a roll of standard PVB interlayer material.

The adhesive, particularly the PVB, may have a wedge-shaped cross-section to provide a cavity having a slightly decreasing width from its closed bottom to its open end. Suitable wedge-shaped PVB strips may, e.g., be cut from interlayers designed for windscreens usable as a combiner for HUD applications.

In addition thereto or alternatively the mounting strip may have an upturned edge, such that the distance between the mounting strip and the glazing is smaller at the open end of the cavity than at the closed end of the cavity.

Preferably, the mounting strip comprises one of stainless steel or steel having a corrosion-resistant coating thereon. The mounting strip may comprise at least one cut-out for engaging with a corresponding protrusion on the glazing component. The mounting strip may additionally or alternatively comprise means, such as a notch, for centring the mounting strip on the glazing, using a corresponding marking on the glazing.

The adhesive strip and the mounting strip may be positioned on the surface of the glazing so as to form a second cavity for receiving a second glazing component, the second cavity facing away from the edge of the glazing.

The glazing may further comprise a glazing component mounted on the glazing, the glazing component comprising a retaining strip dimensioned to fit and be inserted into the cavity. The retaining strip may comprise one of a plurality of protrusions or a roughened surface in contact with at least one of the glazing or the mounting strip. At least one of these protrusions may be dimensioned to fit within a cut-out region in the mounting strip. The retaining strip may comprise a cavity for receiving an adhesive to bond the retaining strip to the glazing. Preferably, the retaining strip comprises a metal insert embedded between layers of plastic material. The metal insert may reinforce at least one protrusion on the retaining strip. The retaining strip may be shaped, having a pair of parallel bends along its length creating a stepped profile.

Preferably, the glazing component is one of a cowling or water tray mounting profile, a sealing profile, a dam profile (damming the adhesive by which the glazing is fixed to the car body) or a spacer profile (for example, for spacing the glazing from a car body flange).

Preferably, the adhesive is polyvinyl butyral.

The adhesive may have a wedge-shaped cross-section.

The adhesive and mounting strip may be positioned on the surface of the glazing to form a second cavity for receiving a second glazing component, the second cavity facing away from the edge of the glazing.

The present invention will now be described by way of example only, and with reference to the accompanying drawings in which:
Figure 1 is a schematic cross section of a glazing having a cowling mounting profile attached thereto in accordance with the present invention;
Figure 2 is a schematic plan view of a glazing having a mounting strip attached in accordance with the present invention;
Figure 3a is a schematic cross section of a close up view of a first configuration of a part of Figure 1;
Figure 3b is a schematic cross section of a close up view of a second configuration of a part of Figure 1;
Figure 3c is a schematic cross section of a close up view of a third configuration of a part of Figure 1;
Figure 3d is a schematic cross section of a close up view of a fourth configuration of a part of Figure 1;
Figure 3e is a schematic cross section of a close up view of a fifth configuration of a part of Figure 1;
Figure 3f is a schematic cross section of a close up view of a sixth configuration of a part of Figure 1;
Figure 3g is a schematic cross section of a close up view of a seventh configuration of a part of Figure 1;
Figure 4 is a further schematic cross-section view of a mounting strip;
Figure 5 is a schematic plan view of a portion of a mounting strip;
Figure 6 is a schematic plan view of an entire mounting strip;
Figure 7 is a schematic cross-section of a mounting strip used to mount two glazing components at the same time; and
Figure 8 as a schematic cross-section view of a mounting strip in accordance with a second embodiment of the present invention.

In the present invention, it has been appreciated that in order to reduce storage and transportation costs, it is necessary to provide a way of attaching a glazing component such as a cowling or water-tray mounting profile to a glazing which does not require any fittings to extend either beyond the periphery of the glazing, or a significant distance out of the plane of the glazing during the transport of the glazing to the vehicle manufacturer. In the non-limiting example below, the glazing component mounted onto the surface of the glazing is a cowling or water tray mounting profile. The mounting profile holds the cowling in place when the glazing is fitted in a vehicle. Once the mounting strip is mounted on the glazing, the profile may be inserted. The cowling or water tray can then be clipped in or otherwise fixed to the profile. For other components, inserting the profile alone is sufficient, such as for a sealing profile.

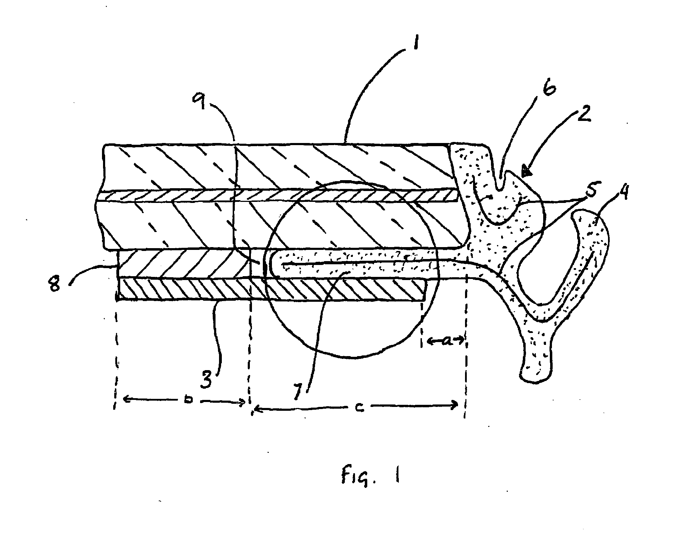

Figure 1 is a schematic cross section of a glazing having a mounting profile for a cowling attached thereto in accordance with the present invention. A laminated glazing 1 (comprising first and second plies of glass having a co-extensive ply of an interlayer material of PVB or the like laminated therebetween) has a cowling mounting profile 2 attached by means of a mounting strip 3. A single mounting strip 3 is applied to at least one edge of the glazing 1, along each edge where a component will be mounted. The mounting profile 2 is formed of a plastic body 4 having a pair of shaped metal inserts 5 embedded within for structure and strength, and comprises a receiving region 6 for receiving a cowling, and a retaining strip 7, generally elongate in shape. The receiving region 6 runs parallel to the edge of the glazing 1 when the mounting profile 2 is attached, and the retaining strip 7 contacts a major face of the glazing 1. The mounting strip 3 is formed of an elongate sheet of metallic material, such as stainless steel or steel having a corrosion resistant coating, and is bonded to a major face of the glazing 1 by a strip of polyvinyl butyral interlayer material (PVB) 8. The strip of PVB 8 and mounting strip 3 are positioned such that the mounting strip 3 lies inboard of the edge of the glazing 1 by a distance a. The strip of PVB 8 and mounting strip 3 overlap by a distance b, providing a bonding region, where the bonding region begins at a distance c from the edge of the glazing, where c > a. As only a portion of the mounting strip 3 is in contact with the strip of PVB 8, a portion of the mounting strip 3 is not in contact with the major face of the glazing 1, but is held firmly away. The strip of PVB 8 is positioned such that the mounting strip 3 does not overlap the edge of the glazing 1. The mounting strip 3, strip of PVB 8 and major face of the glazing 1 form a cavity 9 that faces the edge of the glazing and is dimensioned to receive the elongate retaining strip 7 of the mounting profile 2.

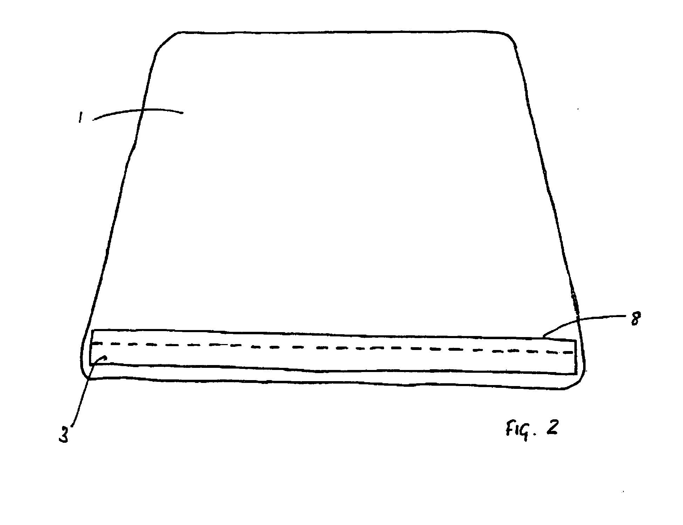

Figure 2 is a schematic plan view of a glazing having a mounting strip attached in accordance with the present invention. The glazing 1 is generally trapezoidal in shape, and has the mounting strip 3 bonded to a major face by the strip of PVB 8 (the position of which is shown by the dotted line). The mounting strip 3 lies inward of the edge of the glazing 1, so that the cavity 9 extends along the length of the mounting strip 3 and faces outwards towards the edge of the glazing 1. The mounting strip 3 is elongate, and dimensioned and optionally curved to fit the edge of the glazing 1 to which it is bonded. Although the mounting strip 3 is shown as extending along substantially all of the length of the length of the bottom edge of the glazing 1, it may be desirable for the mounting strip 3 to only extend along a portion of the edge of the glazing 1.

A further alternative is to provide a number of individual mounting strips 3 that may be joined together or closely spaced along the edge of the glazing 1. For example, a central mounting strip 3 may be provided, formed of a generic design that is suitable for several different glazings and/or vehicle models. This may then be supplemented by at least one, preferably two, further mounting strip 3, which is designed to be vehicle specific, positioned towards the extremities of the glazing. In contrast to the profiles disclosed in DE 199 39 191 B4, each strip has a reasonable length (i.e. is not short), for example, at least 0.2m long. Each may be joined to another mounting strip by a joint, such as a flexible joint or a male-female connection. If spaced apart, the spacing length is shorter than the length of any of the spacing strips, preferably of the order of millimetres or a few centimetres.

In order to bond the mounting strip 3 to a major face of the glazing 1, the mounting strip 3 and strip of PVB 8 are placed onto the glazing 1 adjacent its lower edge, which is then autoclaved. A suitable method of performing this bonding will now be described.

Initially, the glazing I is pre-heated to a temperature of 90°C. The retaining strip 3 is also pre-heated, and positioned on the glazing 1, held in a jig, with the layer of PVB 8 between the mounting strip 3 and a major face of the glazing 1. The mounting strip 3 is positioned such that only a portion of the mounting strip 3 contacts the strip of PVB, and at least a portion of the mounting strip 3 is spaced from the major face of the glazing 1. The mounting strip 3 does not overlap the edge of the glazing 1. A cavity 9 is formed between the glazing 1, the PVB and the mounting strip 3, the cavity 9 facing the edge of the glazing 1, and dimensioned to receive a portion of the cowling mounting profile 2. High pressure is then applied to the mounting strip 3 for approximately 3 seconds, to form an initial bond with the strip of PVB 8. Once this initial bond is completed, the glazing assembly (the glazing 1, the mounting strip 3 and the strip of PVB 8) are placed in an autoclave at 140°C under 12 - 14 bar pressure for at least about 30 minutes, preferably up to 90 minutes. After such heat and pressure treatment the mounting strip 3 can withstand a pull force of at least about 100N applied locally at 90° to the plane of the mounting strip at a free edge of the mounting strip 3 immediately after cooling. The adhesion strength of the PVB strip 8 is significantly greater than that available using either self-adhesive or polyurethane adhesive materials.

Once the glazing 1 with the mounting strip 3 bonded thereto has cooled, the retaining strip 7 of mounting profile 2 may be inserted into the cavity 9, such that the mounting profile 2 abuts the edge of the glazing 1, forming a waterproof seal. The positioning of the strip of PVB 8 and mounting strip 3 can be altered to take into account tolerances in the shape and size of the mounting profile 2. However, it is not necessary to insert the mounting profile 2 immediately, and the glazing 1 may be stored or transported with only the mounting strip 3 bonded thereto, and the mounting profile 2 fitted subsequently in a factory at or near where the glazing 1 will be fitted into a vehicle. By providing a mounting strip 3 which extends in total only about 3 to 4mm out of the plane of the glazing, up to 40% more glazings may be stored on a rack compared with glazings having a cowling fitted in a conventional manner, such as that described in EP 1 280 675 B1. Alternatively, bonding of the mounting strip 3 may be carried out during the lamination process of a laminated glazing.

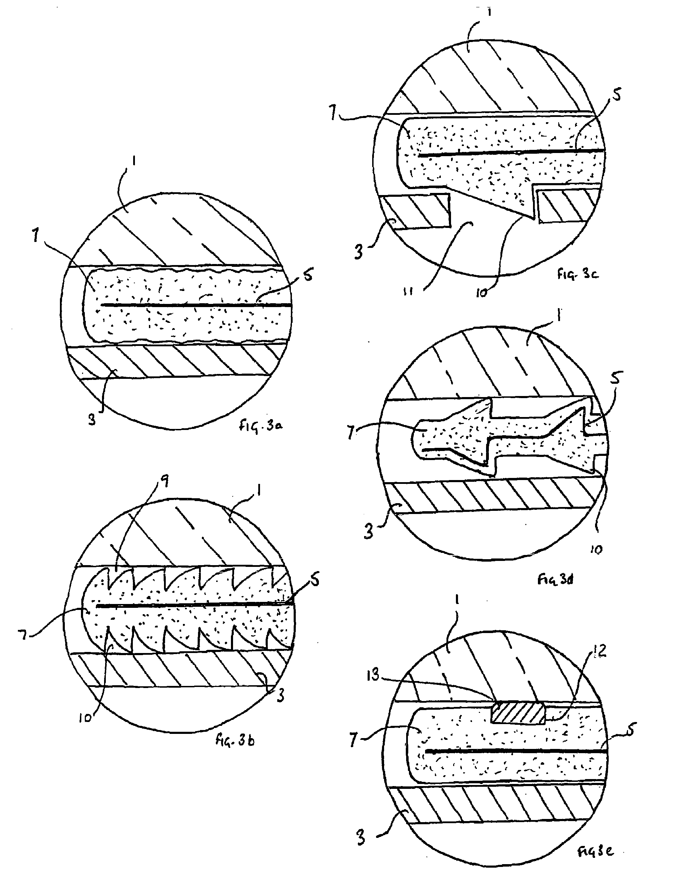

The strength of the bond between the mounting profile 2 and the glazing 1, and the integrity of the waterproof seal can be improved by optimising the design of the retaining strip 7. Figures 3a to 3g show schematic cross sections of a close up view of a first to a seventh configuration of a part of Figure 1, highlighting the retaining strip 7. By increasing the roughness of the retaining strip 7, not only is the mounting profile 2 more able to withstand a pull force in the plane of the glazing 1, but it will be held in closer, more resilient, abutment with the edge of the glazing 1. Figure 3a illustrates a retaining strip 7 having a roughened surface, for engaging with both the major face of the glazing 1 and the mounting strip 3. Figure 3b illustrates a retaining strip 7 having a series of grooves along its upper and lower surfaces, creating protrusions 10 that contact both the major surface of the glazing 1 and the mounting strip 3.

Figure 3c illustrates both a modified retaining strip 7 and a modified mounting strip 3. The mounting strip 3 is provided with a cut-out region 11 into which a corresponding protrusion 10 on the lower edge of the retaining strip fits. The protrusion 10 comprises a sloping surface, such that the mounting profile 2 may be inserted into the cavity 9 formed by the mounting strip 3, the PVB 8 and the glazing 1 by sliding, and a vertical surface that engages with one edge of the cut-out region 11, preventing removal of the mounting profile 2 after insertion.

Figure 3d illustrates a variation of the retaining strip design shown in Figure 3b. In this case, the protrusions 10 are partially reinforced by the metal insert 5 having a shaped structure, providing support for alternating protrusions 10.

Figure 3e shows a further modification to the retaining strip 7, in which a cavity 12 is provided on the upper surface of the retaining strip 7 (in contact with the glazing 1), which may be filled with an additional adhesive 13. This may provide further resistance to removal of the retaining strip 7 from the cavity 9 during service of the glazing 1.

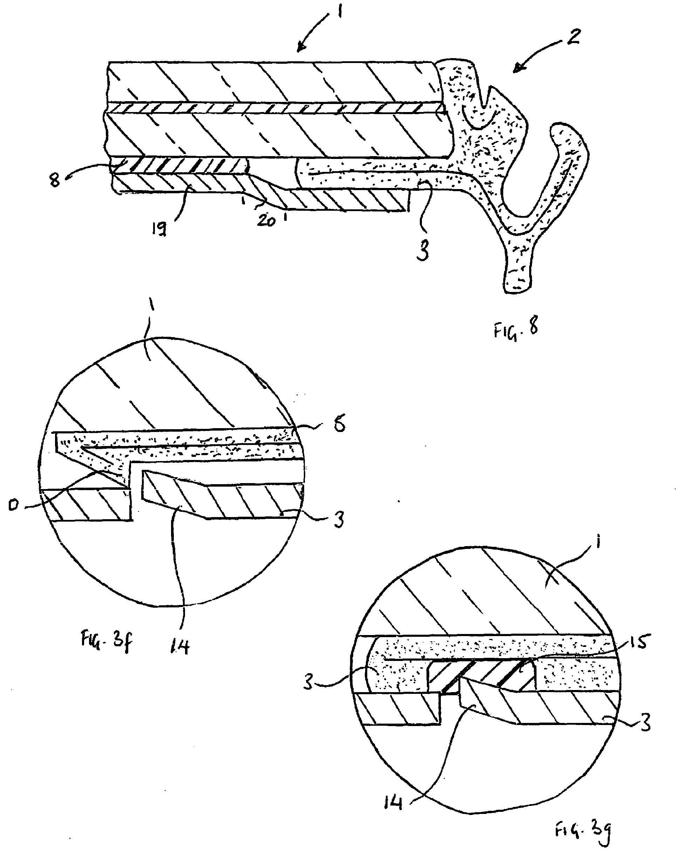

Figure 3f shows a further modification to both the retaining strip 7 and the mounting strip 3. A toothed region 14 is provided in the mounting strip 3, by punching out a 3-sided region of the strip 3. The toothed region 14 creates a simple ratchet system, where a protrusion 10 on the retaining strip may engage with the toothed region 14, preventing removal of the retaining strip 7 from the glazing 1. Figure 3g shows a variation on the retaining strip 7 shown in Figure 3f. Rather than having a protrusion 10, the retaining strip 7 has a region 15 of a softer material than the main body of the retaining strip, into which the toothed region 14 is embedded when the retaining strip 7 is inserted into the cavity 9. If the retaining strip 7 is formed from polypropylene, for example, a suitable softer material is TPE (thermoplastic elastomer). As an alternative to a design having a pre-formed toothed region, a flat mounting strip 3 having a pre-cut toothed region 14 that is pressed out during assembly may be used. In this situation, once the retaining strip 7 has been inserted into the cavity 9, the pre-cut toothed region 14 may be pressed into the region 15 of softer material, securing the retaining strip 7 in place. This may be achieved, for example, by using a piston or other punching device.

In each example shown, the retaining strip 7 comprises a metal insert 5, having a thickness in the range of about 0.2 to 0.3mm, embedded between layers of a plastic material each having a thickness of at least about 0.2mm . Preferably, the retaining strip 7 is less than or equal to 2mm in thickness, more preferably less than or equal to 1.5mm in thickness.

Preferably, the mounting strip 3 has a thickness in the range 0.5mm to 2mm, and the PVB layer 8 a thickness in the range 0.5mm to 2.00mm, corresponding to the dimensions of the elongate retaining strip 7 of the mounting profile 2. However, the thickness (and width) of the PVB layer 8 should also be such that after bonding, the mounting strip 3 is able to withstand a pull force applied locally at 90° to the plane of the mounting strip at a free edge of the mounting strip 3 of at least 100N, preferably at least 150N, and remain bonded to the surface of the glazing. The adhesive should also be able to withstand a push force, applied parallel to the major face of the glazing, of at least 200N, to cope with the insertion of a glazing component during assembly. As an example, a 20mm wide strip of a 0.76mm to 1.5mm thick strip of PVB 8 may bear a local load of about 500N. In order to ensure adequate overlap, a, b and c (Fig. 1) are preferably in the following ranges: 0.0mm ≤ a ≤ 5.0mm, 5.0mm ≤ b ≤ 15.0mm and 20.0mm ≤ c ≤ 25.0mm. Although in the above example, standard PVB (having a constant cross-section) is used as an adhesive, PVB having a slightly wedge-shaped cross-section ("wedge PVB") may be used to bond the mounting strip 3 at an angle to the glazing 1. By creating a cavity 9 in which the distance between the mounting strip 3 and the glazing 1 is smaller at the open end of the cavity 9 than at the closed end, additional frictional force is brought to bear on the retaining strip 7, maintaining its position within the cavity 9 during use.

However, as an alternative to using PVB to bond the mounting strip 3 to the surface of the glazing 1, other adhesive systems, which provide resistance to a pull force applied locally at 90° to the plane of the mounting strip at a free edge of the mounting strip 3 of at least 100N, may be used. Preferably, these adhesives are those which require heat and pressure to form a strong bond, and therefore can be autoclaved. Such suitable adhesives include laminates of epoxy and acrylic films, for example, adhesives 9270 and 9214 available from 3M. Alternatively, other adhesives, such as two-component adhesives requiring inductive heating, and two-component epoxy resins may be used instead.

The mounting strip 3 is preferably formed from a metal strip having a thickness in the range 1mm to 2.5mm, preferably about 1mm, comprising a corrosion resistant material, such as stainless steel, or a steel strip having a corrosion resistant coating applied all around after cutting to size. The strip may be press bent, rolled or cast, as desired. One advantage of using a metal strip, compared to a plastics strip, as the mounting strip, is that metals such as stainless steel and glass have much closer coefficients of thermal expansion, reducing the chances of thermal shock breakage of the glazing and decreasing the thickness of the PVB layer 8 necessary to compensate the different expansion coefficients. In addition, it may be desirable for different parts of the mounting strip to be formed from different materials, or using different processes. For example, the end portions of each strip may be vehicle specific, and formed from pressed steel, and the central portion generic, and formed from rolled steel.

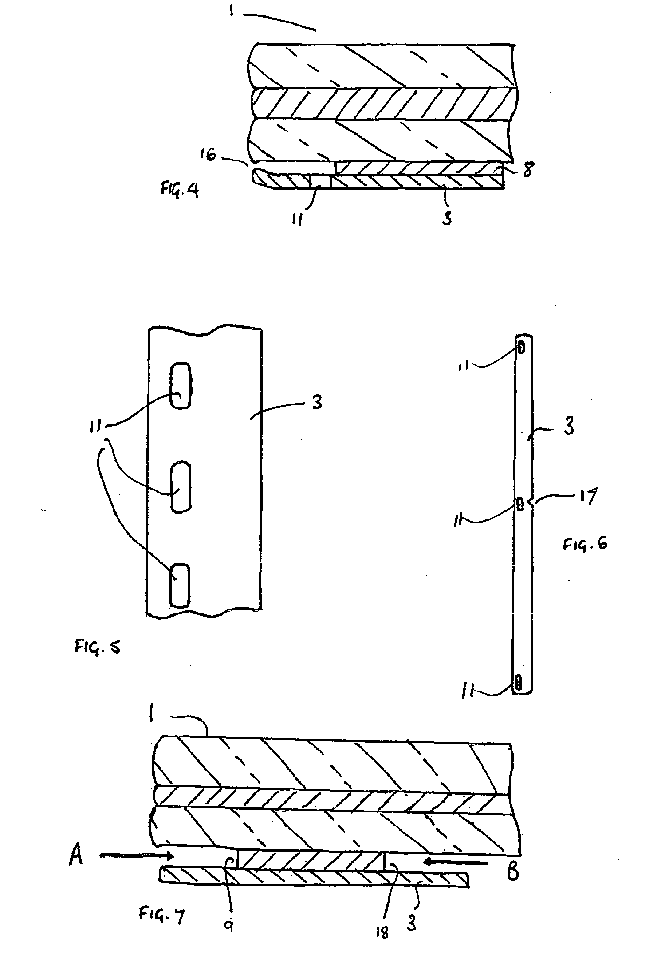

Possible configurations of the mounting strip 3 are shown in more detail in Figures 4, 5 and 6. Figure 4 is a schematic cross-section view of a mounting strip 3 having both a cut-out region 11 for receiving a protrusion positioned on the retaining strip, and an upturned edge 16 facing in towards the major face of the glazing, adjacent the edge of the glazing 1. By providing an upturned edge, additional frictional force may be applied to the retaining strip 7, maintaining the position of the mounting profile 2 during the lifetime of the glazing.

Figure 5 shows a schematic close-up plan view of the mounting strip 3, illustrating the positions of a plurality of cut-out regions 11 that correspond to the positions of the protrusions 10 (as shown in Figure 3c). Figure 6 is a schematic plan view of an entire elongate mounting strip 3, comprising three cut-out regions 11: one at each opposing end of the mounting strip 3 and one central cut-out region 11, positioned equidistant from the other two cut-out regions 11. A locating notch 17 is also provided, adjacent the central cut-out region 11, allowing the mounting strip 3 to be centred on the glazing 1 easily by reference to a (not shown) corresponding reference marking on the glazing 1. Although in Figure 6 the mounting strip 3 is shown as having parallel edges, it is desirable that the mounting strip 3 has a generally curved shape to match the generally curved edge of the glazing 1 adjacent to which it will be mounted. The long edges of the retaining strip 3 may be spaced an equal distance apart along their entire length, or a varying distance apart, depending on the glazing component to be mounted to the glazing 1.

Although the example described above uses the mounting strip 3 to mount a cowling mounting profile 2 onto the edge of a glazing 1, the mounting strip 3 may also be used to mount other glazing components or their mounting profiles onto automotive glazings. Preferably, the glazing component is one of a cowling or water tray mounting profile, a sealing profile, a dam profile (damming the adhesive by which the glazing is fixed to the car body) or a spacer profile (for example, for spacing the glazing from a car body flange). Glazing components provided with a flat extension to form a retaining strip 7 may be inserted into the cavity 9 formed by the mounting strip 3, strip of PVB 8 and the glazing 1. Figure 7 is a schematic cross-section view of a mounting strip 3 used to mount two glazing components at the same time. As illustrated in Figure 7, further components may be mounted onto the glazing 1 at the same time as the glazing component to be attached to the edge of the glazing 1, by positioning the mounting strip 3 and strip of PVB 8 such that two cavities, 9 and 18 are formed: one (9) facing to and positioned adjacent the edge of the glazing 1, formed from a first edge of the mounting strip 3; and one (18) facing away from the edge of the glazing 1, formed from the opposite edge of the mounting strip 3. The glazing components may be inserted with their respective retaining strips into each cavity in opposite directions, as indicated by arrows A and B. This enables several components to be mounted firmly to the surface of a glazing with only one mounting strip, along one or several of the edges of the glazing. Consequently, the mounting strip 3 may be used to mount glazing components or mounting profiles onto any automotive glazing, either laminated or single-ply, such as windscreens, backlights, sidelights and rooflights.

Figure 8 is a schematic cross-section of a mounting strip in accordance with a second embodiment of the present invention. Rather than creating a cavity 9 where the height of the cavity is determined by the thickness of the PVB 8, a shaped retaining strip 19 is used, creating a cavity having a greater height than that corresponding to the thickness of the PVB. The shaped retaining strip 19 is again formed from a strip of metallic material, but is provided with a pair of parallel bends along its length (parallel with the long edges of the strip) that create a stepped profile. A first portion of the retaining strip 19 lies substantially in a first plane, with the two parallel bends forming a link portion to a second portion of the retaining strip lying substantially in a second plane, such that the first and second planes lie in parallel with each other.

The use of a shaped retaining strip 19 has the advantage that the stiffness of the retaining strip is increased by the use of a bent region 20. This then allows the strip 19 itself to be formed from a strip of metal having a reduced thickness compared with that in the examples above, for example, less than or equal to 0.5mm, whilst retaining the mechanical properties necessary for the successful retention of a retaining strip.

## Claims

1. An automotive glazing (1) having a mounting strip (3) for mounting a glazing component (2) attached adjacent at least one edge thereof and extending along at least a portion of the length of that edge, the mounting strip being bonded to a major face of the glazing by a strip of adhesive material (8) in contact with at least a portion of the mounting strip, at least another portion of the mounting strip being spaced from the major face of the glazing and the adhesive being positioned such that the mounting strip does not overlap the edge of the glazing, **characterized in that** a cavity (9) is formed between the glazing, the adhesive and the mounting strip, the adhesive forming a closed end of the cavity, and an open end of the cavity faces the edge of the glazing and is dimensioned to receive a portion of said glazing component, and wherein the mounting strip remains bonded to the surface of the glazing when subjected to a pull force of at least 100N, when applied at an angle of 90° to the surface of the glazing.

2. A glazing according to claim 1, wherein the glazing (1) comprises a single mounting strip (3) along at least one edge.

3. A glazing according to claim 1, wherein the glazing (1) comprises at least a first and a second mounting strip (3) positioned along each edge, the first mounting strip being generic and the second mounting strip being vehicle specific, wherein the first mounting strip is joined to the second mounting strip.

4. A glazing according to claim 1, wherein the glazing (1) comprises at least a first and a second mounting strip (3) positioned along each edge, the first mounting strip being generic and the second mounting strip being vehicle specific, the first mounting strip being spaced apart from the second mounting strip by a spacing length that is less than the length of either the first or the second mounting strips.

5. A glazing according to any preceding claim, wherein the adhesive (8) is one requiring heat and pressure bonded to the mounting strip and the surface of the glazing (1), and wherein the adhesive has a wedge-shaped cross-section.

6. A glazing according to any preceding claim, wherein the mounting strip (3) comprises at least one cut-out (11) for engaging with a corresponding protrusion (10) on the glazing component (2).

7. A glazing according to any preceding claim, wherein the mounting strip (3) comprises a means such as a notch (17) for centring the mounting strip on the glazing (1).

8. A glazing according to any preceding claim, wherein the mounting strip (3) has an upturned edge (16) facing in towards the major face of the glazing (1).

9. A glazing according to any preceding claim, wherein the adhesive (8) and mounting strip (3) are positioned on the surface of the glazing (1) to form a second cavity (18) for receiving a second glazing component, the second cavity facing away from the edge of the glazing.

10. A glazing according to any preceding claim, further comprising a glazing component (2) mounted on the glazing (1), the glazing component comprising a retaining strip (7) dimensioned to fit and be inserted into the cavity (9).

11. A glazing according to claim 10, wherein the retaining strip (7) comprises one of a plurality of protrusions (10) or a roughened surface in contact with at least one of the glazing (1) or the mounting strip (3).

12. A glazing according to claim 11, wherein at least one protrusion (10) is dimensioned to fit within a cut-out region (11) on the mounting strip (3).

13. A glazing according to claim 10, wherein the retaining strip (7) comprises a cavity for receiving an adhesive to bond the retaining strip to the glazing (1).

14. A glazing according to any of claims 10 to 13, wherein the retaining strip (7) comprises a metal insert (5) embedded between layers of plastic material.

15. A glazing according to claim 14, where the metal insert (5) reinforces at least one protrusion (10) on the retaining strip (7).

## Patentansprüche

1. Fahrzeugverglasung (1) mit einem Montagestreifen (3) zur Montage einer Verglasungskomponente (2), die an zumindest eine von deren Kanten anschließend angebracht ist und sich zumindest entlang eines Teils der Länge dieser Kante erstreckt, wobei der Montagestreifen mittels eines sich mit zumindest einem Teil des Montagestreifens in Kontakt befindlichen Klebstoffstreifens (8) an einer Hauptfläche der Verglasung befestigt ist, zumindest ein anderer Teil des Montagestreifens von der Hauptfläche der Verglasung beabstandet ist und der Klebstoff so angeordnet ist, dass der Montagestreifen die Kante der Verglasung nicht überdeckt, **dadurch gekennzeichnet, dass** zwischen der Verglasung, dem Klebstoff und dem Montagestreifen eine Aussparung (9) ausgebildet ist, wobei der Klebstoff ein geschlossenes Ende der Aussparung ausbildet und ein offenes Ende der Aussparung zur Kante der Verglasung weist und zur Aufnahme eines Teils der Verglasungskomponente bemessen ist, und wobei die Verbindung des Montagestreifens mit der Oberfläche der Verglasung unter dem Einfluss einer, unter einem Winkel von 90 ° zur Oberfläche der Verglasung ausgeübten, Zugbelastung von mindestens 100 N erhalten bleibt.

2. Verglasung nach Anspruch 1, worin die Verglasung (1) einen einzelnen Montagestreifen (3) entlang zumindest einer Kante aufweist.

3. Verglasung nach Anspruch 1, worin die Verglasung (1) zumindest einen ersten und einen zweiten Montagestreifen (3) umfasst, die entlang einer jeden Kante angeordnet sind, wobei der erste Montagestreifen generisch und der zweite Montagestreifen fahrzeugspezifisch ausgebildet ist, und wobei der erste Montagestreifen an den zweiten Montagestreifen anschließt.

4. Verglasung nach Anspruch 1, worin die Verglasung (1) zumindest einen ersten und einen zweiten Montagestreifen (3) umfasst, die entlang einer jeden Kante angeordnet sind, wobei der erste Montagestreifen generisch und der zweite Montagestreifen fahrzeugspezifisch ausgebildet ist, und wobei der erste Montagestreifen zum zweiten Montagestreifen beabstandet angeordnet und die Länge des Abstands kürzer als die Länge von entweder dem ersten oder dem zweiten Montagestreifen ist.

5. Verglasung nach einem der vorgergehenden Ansprüche, worin der Klebstoff (8) zu einem Verbinden mit dem Montagestreifen und der Oberfläche der Verglasung (1) unter Wärmezufuhr und Druckausübung ausgebildet ist, und worin der Klebstoff einen keilförmigen Querschnitt aufweist.

6. Verglasung nach einem der vorhergehenden Ansprüche, worin der Montagestreifen (3) zumindest eine Ausnehmung (11) für den Eingriff eines entsprechenden Vorsprungs (10) an der Verglasungskomponente (2) aufweist.

7. Verglasung nach einem der vorhergehenden Ansprüche, worin der Montagestreifen (3) eine Einrichtung wie beispielsweise eine Vertiefung (17) zum Zentrieren des Montagestreifens auf der Verglasung (1) aufweist.

8. Verglasung nach einem der vorhergehenden Ansprüche, worin der Montagestreifen eine abgewinkelte Kante (16) aufweist, die in Richtung der Hauptfläche der Verglasung (1) weist.

9. Verglasung nach einem der vorhergehenden Ansprüche, worin der Klebstoff (8) und der Montagestreifen (3) so auf der Oberfläche der Verglasung (1) angeordnet sind, dass eine zweite Aussparung (18) zur Aufnahme einer zweiten Verglasungskomponente ausgebildet wird, wobei die zweite Aussparung zur Kante der Verglasung abgewandt angeordnet ist.

10. Verglasung nach einem der vorhergehenden Ansprüche, die ferner eine an der Verglasung (1) angefügte Verglasungskomponente (2) aufweist, wobei die Verglasungskomponente einen Haltestreifen (7) aufeist, der so bemessen ist, dass er in die Aussparung (9) passt und eingebracht werden kann.

11. Verglasung nach Anspruch 10, worin der Haltestreifen (7) einen von mehreren Vorsprüngen (10) oder eine aufgeraute Oberfläche aufweist, die sich mit der Verglasung (1) und / oder dem Montagestreifen (3) in Kontakt befinden.

12. Verglasung nach Anspruch 11, worin zumindest ein Vorsprung (10) so bemessen ist, dass er in einen Ausnehmungsbereich (11) am Montagestreifen (3) passt.

13. Verglasung nach Anspruch 10, worin der Haltestreifen (7) eine Aussparung zur Aufnahme eines Klebstoffs für die Befestigung des Haltestreifens an der Verglasung (1) aufweist.

14. Verglasung nach einem der Ansprüche 10 bis 13, worin der Haltestreifen (7) einen Metalleinsatz (5) aufweist, der zwischen Schichten aus Kunststoffmaterial eingebettet ist.

15. Verglasung nach Anspruch 14, worin der Metalleinsatz (5) zumindest einen Vorsprung (10) des Haltestreifens (7) verstärkt.

## Revendications

1. Vitrage automobile (1) ayant une bande de montage (3) permettant de monter un composant de vitrage (2) fixé à proximité immédiate d'au moins l'un de ses bords et s'étendant le long d'au moins une partie de la longueur de ce bord, la bande de montage étant collée à une face principale du vitrage par un ruban de matériau adhésif (8) en contact avec au moins une partie de la bande de montage, au moins une autre partie de la bande de montage étant espacée de la face principale du vitrage et l'adhésif étant positionné de façon que la bande de montage ne chevauche pas le bord du vitrage, **caractérisé en ce qu'**une cavité (9) est formée entre le vitrage, l'adhésif et la bande de montage, l'adhésif formant une extrémité fermée de la cavité, et **en ce qu'**une extrémité ouverte de la cavité est située en face du bord du vitrage et est dimensionnée pour recevoir une partie dudit composant de vitrage, et dans lequel la bande de montage reste collée à la surface du vitrage lorsqu'elle est soumise à une force de traction d'au moins 100N, lorsque celle-ci est appliquée à un angle de 90° par rapport à la surface du vitrage.

2. Vitrage selon la revendication 1, ledit vitrage (1) comprenant une bande de montage unique (3) le long d'au moins un bord.

3. Vitrage selon la revendication 1, ledit vitrage (1) comprenant au moins une première et une seconde bande de montage (3) positionnées le long de chaque bord, la première bande de montage étant générique et la seconde bande de montage étant propre au véhicule, dans lequel la première bande de montage est jointe à la seconde bande de montage.

4. Vitrage selon la revendication 1, ledit vitrage (1) comprenant au moins une première et une seconde bande de montage (3) positionnées le long de chaque bord, la première bande de montage étant générique et la seconde bande de montage étant propre au véhicule, la première bande de montage étant espacée de la seconde bande de montage d'une distance d'espacement qui est inférieure à la longueur de l'une ou l'autre des première et seconde bandes de montage.

5. Vitrage selon l'une quelconque des revendications précédentes, dans lequel l'adhésif (8) est d'un type nécessitant le collage à chaud et sous pression à la bande de montage et à la surface du vitrage (1), et dans lequel l'adhésif a une section transversale en forme de coin.

6. Vitrage selon l'une quelconque des revendications précédentes, dans lequel la bande de montage (3) comprend au moins une découpe (11) destinée à s'engager sur une protubérance correspondante (10) présente sur le composant de vitrage (2).

7. Vitrage selon l'une quelconque des revendications précédentes, dans lequel la bande de montage (3) comprend un moyen tel qu'une encoche (17) permettant de centrer la bande de montage sur le vitrage (1).

8. Vitrage selon l'une quelconque des revendications précédentes, dans lequel la bande de montage (3) présente un bord tourné vers le haut (16) orienté vers la face principale du vitrage (1).

9. Vitrage selon l'une quelconque des revendications précédentes, dans lequel l'adhésif (8) et la bande de montage (3) sont positionnés sur la surface du vitrage (1) de façon à former une seconde cavité (18) destinée à recevoir un second composant de vitrage, la seconde cavité étant tournée à l'opposé du bord du vitrage.

10. Vitrage selon l'une quelconque des revendications précédentes, comprenant en outre un composant de vitrage (2) monté sur le vitrage (1), le composant de vitrage comprenant une bande de retenue (7) dimensionnée de façon à s'ajuster et à être insérée dans la cavité (9).

11. Vitrage selon la revendication 10, dans lequel la bande de retenue (7) comprend l'une d'une pluralité de protubérances (10) ou d'une surface rugueuse en contact avec au moins l'un du vitrage (1) ou de la bande de montage (3).

12. Vitrage selon la revendication 11, dans lequel au moins une protubérance (10) est dimensionnée de façon à s'ajuster à l'intérieur d'une région découpée (11) sur la bande de montage (3).

13. Vitrage selon la revendication 10, dans lequel la bande de retenue (7) comprend une cavité destinée à recevoir un adhésif permettant de coller la bande de retenue au vitrage (1).

14. Vitrage selon l'une quelconque des revendications 10 à 13, dans lequel la bande de retenue (7) comprend un insert métallique (5) incrusté entre des couches de matière plastique.

15. Vitrage selon la revendication 14, dans lequel l'insert métallique (5) renforce au moins une protubérance (10) sur la bande de retenue (7).
